# EUROPEAN PATENT APPLICATION

(11) **EP 1 180 557 A1**
(43) Date of publication of application: **20.02.2002**
(21) Application number: 01115003.4
(22) Date of filing: 20.06.2001
(51) Int. Cl.: D04C 1/06, D03D 25/00

(54) **Three dimensional structure, and apparatus and method for manufacturing a three dimensional structure**

(30) Priority: 09.08.2000 JP 2000240796
(71) Applicant: Murata Kikai Kabushiki Kaisha, Minami-ku, Kyoto-shi, Kyoto 601 (JP)
(72) Inventor: Uchida, Hiroshi, Oumihachiman-shi, Shiga (JP); Takashima, Hiroki, Kusatsu-shi, Shiga (JP); Yamamoto, Takumi, Todou Yabusato, Uji-shi, Kyoto (JP); Hirukawa, Masao, Uji-shi, Kyoto (JP)
(74) Representative: Liedl, Christine, Dipl.-Chem.

(57) **Abstract**

It is an object to provide a method for manufacturing a three dimensional structure employing the principle of braid composition to compose a three dimensional mesh or net and a manufacturing apparatus for a three dimensional structure which is applicable to the method. A method for manufacturing a three dimensional structure with a linear structure (1) pulled out individually from a plurality of bobbin carriers (2), comprises the steps of: supporting said plurality of bobbin carriers transferably and loadably; and moving the bobbin carrier so that linear structures from at least three directions are joined to converge in nodes Tw1, Tw2 at intervals in a composing direction and thereafter diverge in at least three directions.

## Description

### Field of the Invention

The present invention relates to a three dimensional structure, and an apparatus and its method for manufacturing a three dimensional structure composed on the principle of braid composition, particularly for supplying a three dimensional structure formed three dimensionally. More specifically, the invention relates to manufacture of a three dimensional structure which may be placed in a fluid channel of a distillation device and employed effectively as a filler and so forth for a mass transfer, a heat exchange, and so on.

### Background of the Invention

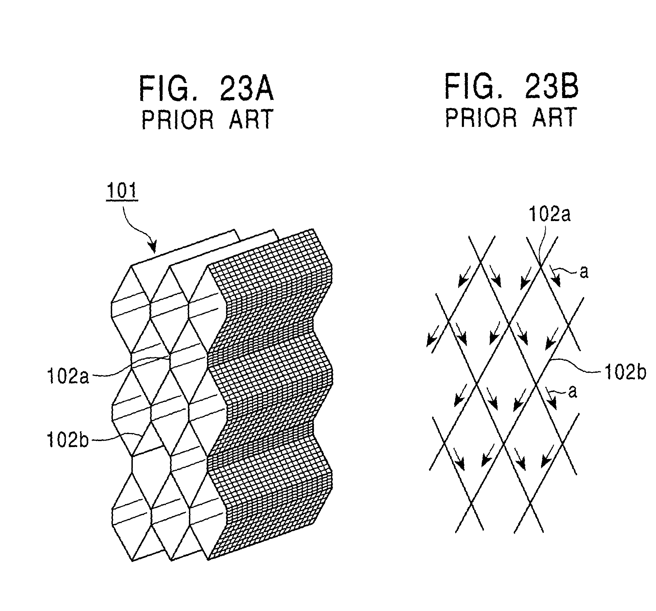

For instance, the art disclosed in Japanese Unexamined Patent Publication (Tokkai-Hei) No. 5-96101 is Known as a method of manufacturing fillers performing a mass transfer, a heat exchange, and so forth in a fluid channel of a distillation device. This conventional art is based on the principle of a weaving pattern of a weaving machine using warp yarn and weft yarn. As shown in Figure 23A, this filler 101, produced by this conventional art, is joined to respective layers of a multi-layer permeable board 102 via a junction 102a to be composed as the so-called X packing, (a form of X shape in cross-sectional section of the junction 102a formed by permeable boards next to each other), separated in a non-junction 102b.

In the case of using fillers 101, produced by said conventional art, as fillers to fill for an apparatus performing a mass transfer, such as gas to gas, liquid to liquid, or gas to liquid, a heat exchange, or a mixing, a flow of liquid as shown with allows "a" in Figure 23B leads to the junction 102a from two directions and only flows to two directions (when viewing cross sectionally, it is nothing but two dimensional X shape and does not have a three dimensional X structure section), so filtration efficiency as a filter is low.

In order to solve the above-mentioned problems, it is an object of the present invention to provide a manufacturing method for a three dimensional structure in order to produce the three dimensional structure, which has a three dimensional X confounding structure section (a 3X confounding structure, a 4X confounding structure, or a 6X-3X confounding structure) comprising the junctions of the structure, and a manufacturing apparatus for a three dimensional structure which is applicable to the method.

### Summary of the Invention

The present invention is to accomplish the above-mentioned object, and specifically, a manufacturing method for a three dimensional structure to compose a three dimensional structure with a linear structure pulled out individually from a plurality of bobbins comprises the steps of, supporting said plurality of bobbin carriers transferably and loadably, moving the bobbin carrier so that linear structures from at least three directions are joined to converge at intervals in a composing direction and diverge in at least three directions.

Furthermore, the present invention composes a manufacturing method for a three dimensional structure to compose a 3X three dimensional structure, comprising the steps of, supporting said plurality of bobbin carriers transferably and loadably, and moving the bobbin carrier so that linear structures from three directions are joined to converge at intervals in a composing direction and diverge in three directions in order to form a 3X junction.

Furthermore, the present invention composes a manufacturing method for a three dimensional structure to compose a 4X three dimensional structure, comprising the steps of, supporting said plurality of bobbin carriers transferably and loadably, and moving the bobbin carrier so that linear structures from four directions are joined to converge at intervals in a composing direction and diverge in four directions in order to form a 4X junction.

Furthermore, the present invention composes a manufacturing method for a three dimensional structure to compose a 6X-3X three dimensional structure, comprising the steps of, supporting said plurality of bobbin carriers transferably and loadably, and moving the bobbin carrier so that linear structures from six directions are joined to converge at intervals in a composing direction, diverge in six directions in order to form a 6X junction, join to converge the linear structure from two directions to respective diverged linear structures mentioned above, and diverge in three directions for composing a 3X three dimensional structure.

Furthermore, the present invention comprises a manufacturing apparatus for a three dimensional structure to compose a three dimensional structure with a linear structure pulled out individually from a plurality of bobbin carriers, comprising: bobbin carrier driving means for supporting said plurality of bobbin carriers transferably and loadably and moving the bobbin carrier sot that linear structures from at least three directions are joined to converge at intervals in a composing direction and diverge in at least three directions; beating means for beating a convergent junction of said linear structure; and structure lifting means for pulling up a formed structure.

Furthermore, the present invention comprises a manufacturing apparatus for three dimensional structures comprising: bobbin carrier driving means, provided with a plurality of bobbin shaft receiving entrances opening in radial directions, supporting to stow a plurality of bobbin carrier driving disks arranged to contact with a periphery and a bobbin carrier in a plurality of bobbin carrier shaft receiving entrances in said bobbin carrier driving disks; and a bobbin transfer mechanism for transferring the bobbin carrier to a plurality of bobbin carrier shaft receiving entrances in the adjacent bobbin carrier driving disk.

Furthermore, the present invention comprises a manufacturing apparatus for a three dimensional structure composed of a reed structured solid that said beating means beats convergent junctions of said linear structures from at least three directions.

Furthermore, the present invention comprises a manufacturing apparatus for three dimensional structures wherein said beating means includes any of a torsion reinforcing mechanism, a forced torsion mechanism and a forced transfer mechanism.

Furthermore, the present invention is to provide a three dimensional structure, comprising: a first confounding section converged with linear structures from at least three directions at intervals to confound; a second confounding section converged with the linear structures from at least two directions adjacent to respective linear structures diverged in at least three directions from said confounding section to confound, wherein said first confounding section and said second confounding section are disposed successively.

Furthermore, the present invention is to provide a three dimensional structure, comprising: a first confounding section converged with linear structures from three directions at intervals to confound; a second confounding section converged with the linear structures from two directions adjacent to respective linear structures diverged in three directions from said confounding section to confound, wherein said first confounding section and said second confounding section are disposed successively.

Furthermore, the present invention is to provide a three dimensional structure, comprising: a first confounding section converged with linear structures from four directions at intervals to confound; a second confounding section converged with the linear structures from three directions adjacent to respective linear structures diverged in four directions from said confounding section to confound, wherein said first confounding section and said second confounding section are disposed successively.

Furthermore, the present invention is to provide a three dimensional structure, comprising: a first confounding section converged with linear structures from six directions at intervals to confound; a second confounding section converged with the linear structures from two directions adjacent to respective linear structures diverged in six directions from said confounding section to confound, wherein said first confounding section and said second confounding section are disposed successively.

Furthermore, the present invention is to provide a three dimensional structure as in any of claims 8-10, wherein said each linear structure is twisted linear structures of which a plurality of strands are twisted.

Furthermore, the present invention is to provide a three dimensional structure, wherein said first confounding section and/or said second confounding section are twisted and entangled to form solid confounding section.

### Brief Description of the Drawings

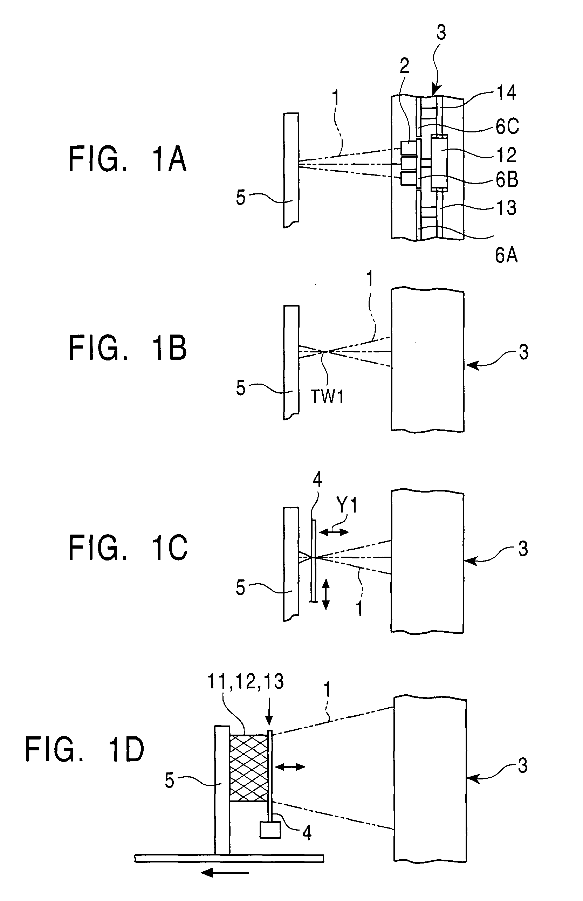

Figure 1 illustrates a schematic manufacturing process of a three dimensional structure as an example of basic composition in a manufacturing method and a manufacturing apparatus for a three dimensional structure according to the present invention; Figure 1A is a schematic elevation of a linear structure end, partly broken away, which is pulled out from a bobbin carrier and secured to a product lifting device; Figure 1B is a schematic elevation showing a solid 3X confounding section of the first layer twisted to form; Figure 1C is a schematic elevation showing a solid 3X confounding section of the first layer beaten by a beating means; and Figure 1D is a schematic elevation showing an intermediate manufacturing process of a three dimensional structural product which is formed a plurality of layers of a 3X confounding section and beaten intermittently.

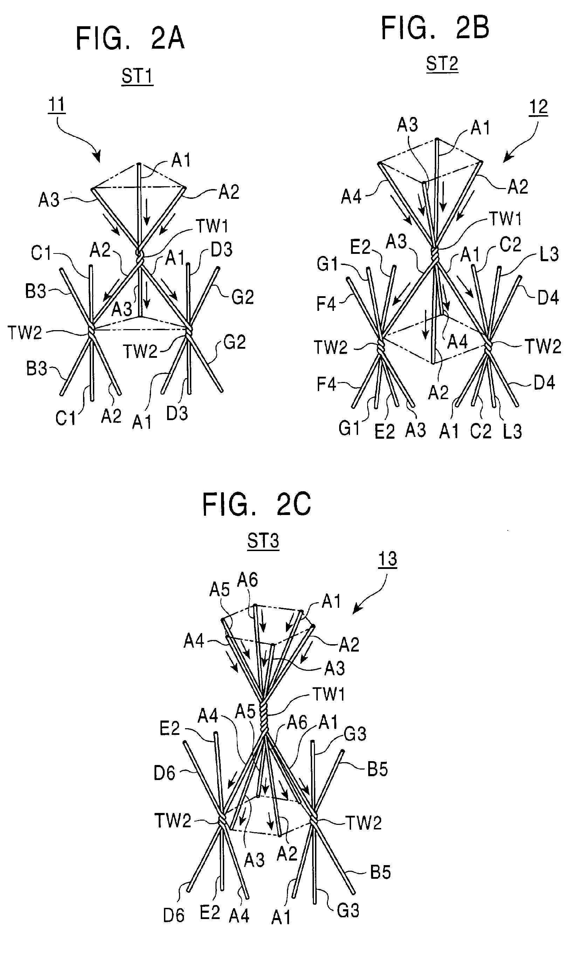

Figure 2 illustrates an example of various structural composition in a three dimensional structure manufactured according to the present invention; Figure 2A is a schematic perspective diagram showing the first composition example (a 3X structure) of a three dimensional structure forming solid 3X confounding sections wherein three pieces of linear structures are beaten and entangled; Figure 2B is a schematic perspective diagram showing the second composition example (a 4X structure) of a three dimensional structure forming solid 4X confounding sections wherein four pieces of linear structures are beaten and entangled; and Figure 2C is a schematic perspective diagram showing the third composition example of a three dimensional structure (a 6X-3X structure) repeatedly forming a solid 6X confounding section, wherein six pieces of linear structures are beaten and entangled, and a solid 3X confounding section, wherein three pieces of linear structures are beaten and entangled, in a structural direction of the composition.
Figure 3 is a schematic sectional side elevation view of the first composition example with parts partially broken away regarding a bobbin carrier driving means for holding a linear structure to transfer regularly in a manufacturing apparatus for a three dimensional structure according to the present invention.
Figure 4 is a schematic plan view of one section of the first composition example regarding a bobbin carrier driving means as shown in Figure 3 is seen horizontally, showing three pieces of bobbin carriers are attached respectively in two pieces of bobbin carriers driving disks.
Figure 5 illustrates the second composition example of a bobbin carrier driving means in a manufacturing apparatus for a three dimensional structure according to the present invention; Figure 5A is a schematic sectional side elevation thereof; and Figure 5B is a schematic plan view thereof.
Figure 6 to Figure 8 illustrate a detailed manufacturing process of a 3X structure ST1 as shown in Figure 2A, and Figure 6 is a schematic plan view showing the condition that bobbin carriers 2 are supported in each of the first bobbin carrier driving disk 6A.
Figure 7 is a schematic plan view showing the condition that bobbin carriers 2 are transferred from each of the first bobbin carrier driving disks 6A to each of the second bobbin carrier 6B to support, after a 3X confounding section Tw1 of the first layer is formed by rotating said bobbin carrier driving disk 6A several times to twist and entangle a linear structure 1 from respective bobbin carriers 2 in a 3X confounding form, in the condition as shown in Figure 6.
Figure 8 is a schematic plan view showing the condition that bobbin carriers 2 are transferred from each of the first bobbin carrier driving disks 6B to each of the second bobbin carrier 6A to support, after a 3X confounding section Tw2 of the second layer is formed by rotating said bobbin carrier driving disk 6B several times to twist and entangle a linear structure 1 from respective bobbin carriers 2 in a 3X confounding form, in the condition as shown in Figure 7.
Figure 9 and Figure 10 illustrate a detailed manufacturing process of a 4X structure ST2 as shown in Figure 2B, and Figure 9 is a schematic plan view showing the condition that bobbin carriers are supported in each of the first bobbin carrier driving disk.
Figure 10 is a schematic plan view showing the condition that bobbin carriers are transferred to be supported in each of the second bobbin carrier driving disk.
Figure 11 to Figure 13 illustrate a detailed manufacturing process of a 6X-3X structure ST3 as shown in Figure 2C, and Figure 11 is a schematic plan view showing the condition that six bobbin carriers are supported in each of the first bobbin carrier driving disk.
Figure 12 is a schematic plan view showing the condition that three bobbin carriers are respectively transferred to be supported in six pieces of the second bobbin carrier driving disks around the first bobbin carrier driving disks.
Figure 13 is a schematic plan view showing the condition that six bobbin carriers are respectively transferred to be supported in each of the first bobbin carrier driving disk.
Figure 14 is a schematic perspective view showing a specific composition example of a beating means to beat this confounding section after forming the confounding section by twisting and entangling a linear structure in a manufacturing apparatus for a three dimensional structure according to the present invention.
Figure 15 illustrates a specific composition example of a reed structured solid in said beating means; Figure 15A is a schematic plan view showing a closed condition of reeds in a reed structured solid with a solid line and an open condition of reeds with an assumed line; and Figure 15B is a schematic perspective view showing one form of a reed piece in said reed structured solid,
Figure 16 illustrates a specific example of a torsion reinforcing means to reinforce a torsion force acting on the linear structure, when a linear structure is made of materials which possess high stiffness such as a wire and so forth in a manufacturing apparatus for a three dimensional structure according to the present invention; Figure 16A is a schematic plan view thereof; and Figure 16B is a schematic elevation thereof.
Figure 17 is a schematic elevation showing an example of a gear for power transmission which is composed of helical gears, another composition example of a torsion reinforcing means as shown in Figure 16.
Figure 18 is a schematic plan view showing a basic composition example of an incorporated forced torsion means to forcibly twist the linear structure in the vicinity of a torsion confounding section when the linear structure is made of materials which possess high stiffness.
Figure 19 illustrates the detailed torsion section in a forced torsion means; Figure 19A is a schematic plan view thereof; and Figure 19B is a schematic end view of the tip side.
Figure 20 illustrates the first example (a select-rod system) of a forced transfer means to forcibly transfer the wire in the vicinity of a confounding section when a linear structure is made of materials which possess high stiffness such as a wire and so forth; Figure 20A is a schematic plan view thereof; and Figure 20B is a schematic side elevation which is seen in the direction of an arrow Y3 in Figure 20A.
Figure 21 is a schematic section view showing a main section of the second example (a balloon system) in the forced transfer means to forcibly transfer materials of a linear structure which possess high stiffness such as a wire and so on in the vicinity of a confounding section.
Figure 22 is a schematic section view showing a main section of the third example (a cylinder system) in the forced transfer means to forcibly transfer materials of a linear structure which possess high stiffness such as a wire and so on in the vicinity of a confounding section.
Figure 23 illustrates an example of a conventional structure of this kind; Figure 23A is a schematic perspective view thereof; and Figure 23B is an explanatory diagram showing a relation with fluid flows in the structure of said conventional example.

### Detailed Description of the Preferred Embodiments

The following is the detailed description regarding the manufacturing method and the manufacturing apparatus for a three dimensional structure in accordance with the present invention on the basis of a concrete embodiment (in particular, a basic embodiment regarding the manufacture of a three dimensional structures 3X) shown in Figure 1 to Figure 8 of attached drawings.

The present invention, for instance, is to use a linear structure 1, which possesses a high stiffness such as a wire, to manufacture a three dimensional structure such as a wire netting having a three dimensional structure on the principle of braid composition, and, as the concrete composition example, it is to produce a three dimensional 3X structure ST1 as shown in Figure 2A, a three dimensional 4X structure ST2 as shown in Figure 2B, and a three dimensional 6X-3X structure ST3 as shown in Figure 2C.

Referring to Figure 1 to Figure 8, the following detailed description is regarding a three dimensional 3X structure ST1 as shown in Figure 2A, from among said concrete composition examples, in a manufacturing method and a manufacturing apparatus for a three dimensional structure in accordance with the present invention.

First, the manufacturing apparatus for a three dimensional structure in accordance with the present invention, as shown in Figure 1, composing a three dimensional structure with a linear structure 1 pulled out individually from a plurality of bobbin carriers 2, comprises bobbin carrier driving means 3 for moving the bobbin carrier in order to support a plurality of bobbin carriers 2 transferably and loadably, join to converge linear structures from at least three directions at intervals in composing direction, and diverge in at least three directions; beating means 4 for beating a convergent junction of said linear structure 1; and structure lifting means 5 to pull up the manufactured structures ST1, ST2 or ST3.

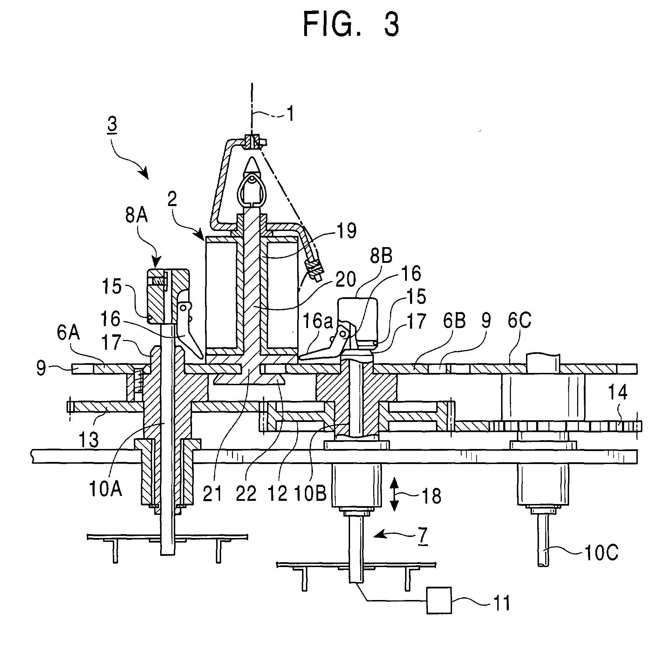

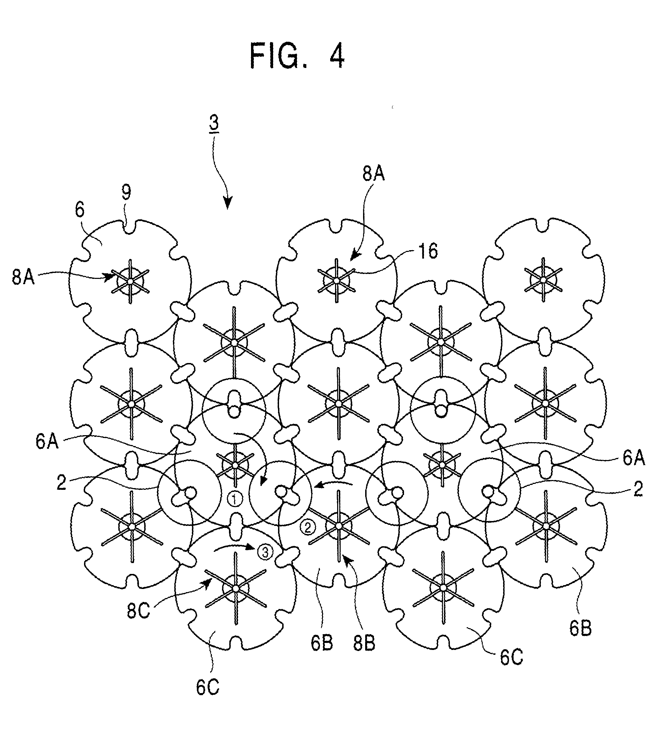

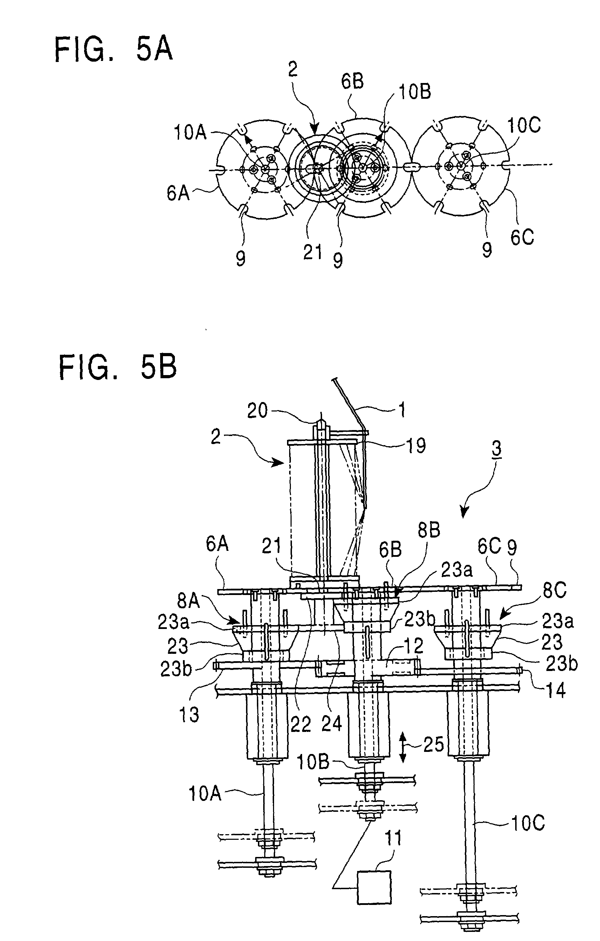

In the present invention, the bobbin carrier driving means 3 for transferring the bobbin carrier 2 is an extremely important element of composition. The concrete embodiment of the bobbin carrier driving means 3 will be described in detail with reference to Figure 3 to Figure 5. The bobbin carrier driving means 3 comprises two different embodiments, the first embodiment shown in Figure3 and Figure 4, and the second embodiment shown in Figure 5A and Figure 5B, in the composition of a bobbin carrier transfer mechanism 8 described later. Though these two embodiments are different in the composition of the bobbin carrier transfer mechanism 8, there are basically no differences in the other composition.

The bobbin carrier driving means 3, as shown in Figure 3 and Figure 4, provided with six bobbin shaft receiving entrances 9 which is open in the radial direction and spaced at a 60-degree angle for instance, comprises a plurality of bobbin carrier driving disks 6 arranged in such manner that each adjacent periphery touches; a rotation drive mechanism 7 in order to drive to rotate the bobbin carrier driving disks 6; and a bobbin carrier transfer mechanism 8A of the first embodiment that it stows to support a bobbin carrier 2 in the bobbin carrier shaft receiving entrance 9 in the bobbin carrier driving disks 6 and transfer the bobbin carrier 2 to the bobbin carrier shaft entrance 9 in the adjacent bobbin carrier driving disks 6.

As shown in Figure 3 and Figure 4, for instance, the bobbin carrier driving means 3 is combined three bobbin carrier driving disks, which are the first bobbin carrier driving disk 6A, the second bobbin carrier driving disk 6B and the third bobbin carrier driving disk 6C, as one driving unit respectively and rotated by the rotation drive mechanism 7. In accordance with the example shown in Figure 3 and Figure 4, the rotation drive mechanism 7 is comprised of a rotation drive source 11 connected to the second bobbin carrier driving disk 6B via a rotation shaft 10B.

The rotation shaft 10B is fitted with a driving gear 12 and the driving gear 12 meshes with a driven gear 13, fitted to a rotation shaft 10A in the first bobbin carrier driving disk 6A , and a driven gear 14, fitted to a rotation shaft 10C in the third bobbin carrier driving disk 6C. For instance, when the first bobbin carrier driving disk 6B is rotated anti-clockwise with the rotation drive source 11, it is possible to rotate the first bobbin carrier driving disk 6A and the third bobbin carrier driving disk 6C clockwise respectively.

A bobbin carrier transfer mechanism 8A of the first embodiment shown in Figure 3 and Figure 4 is constructed on the upper end of the rotation shaft 10 in the respective bobbin carrier driving disks 6. The bobbin carrier transfer mechanism 8A of the first embodiment, for instance, comprising six pieces of a movable pressure piece 16 which is gained momentum in the closed direction all the time by a spring 15, a pressure support member 17 to pressurize the movable pressure piece 16 in the open direction, as opposed to the spring 15, to support, and a rotation shaft vertical motion means 18 to move the rotation shaft 10 up or down, maintains the movable pressure piece 16 in the closed condition, while the rotation shaft 10 is ascending by the rotation shaft vertical motion means 18, and maintains the movable pressure piece 16 in the open condition, while the rotation shaft 10 is descending.

In accordance with Figure 3 and Figure 4, the movable pressure piece 16 in the first bobbin carrier driving disk 6A on the diverged is in the closed condition, and the movable pressure piece 16 in the second bobbin carrier driving disk 6B in the center is in the open condition, and the bobbin carrier 2 is stowed to be supported in the condition of being pushed into the bobbin carrier shaft receiving entrance 9 in the first bobbin carrier driving disks 6A with an action end 16a of the movable pressure piece 16 in the second bobbin carrier driving disk 6B.

On the other hand, the bobbin carrier 2 has a bobbin supporting member 20 to support a bobbin 19 which is releasably twined with linear structures 1. On the bottom end side of a bobbin supporting section 20, a shaft part 21, fitted to the bobbin shaft entrance 9 wherein the bobbin carrier 2 is installed in the bobbin carrier driving disk 6, and a flange part 22 to set the shaft part 21 in the shaft direction are installed.

In the above-mentioned composition, the bobbin carrier transfer mechanism 8A of the first embodiment operates as follows. In accordance with Figure 3, when the rotation shaft 10 of the first bobbin carrier driving disk 6A side is ascending, the movable pressure piece 16 is kept closed. In this condition, if the rotation shaft 10 of the first bobbin carrier driving disk 6B side descends, it opens the movable pressure piece 16 of the second bobbin carrier driving disk 6B side and the bobbin carrier 2 is accepted in the bobbin shaft receiving entrance 9 of the first bobbin carrier driving disk 6A side to be supported.

As is apparent from Figure 4, in accordance with the bobbin carrier transfer mechanism 8 of the first embodiment, when the movable pressure piece 16 of the first bobbin carrier driving disk 6A side is in the closed condition, the surrounding movable pressure pieces 16 of the second bobbin carrier driving disks 6B side and the third bobbin carrier driving disks 6C side are all in the open condition, and three pieces of bobbin carriers 2 are accepted in the bobbin shaft receiving entrance 9 of the first bobbin carrier driving disk 6A side to be supported.

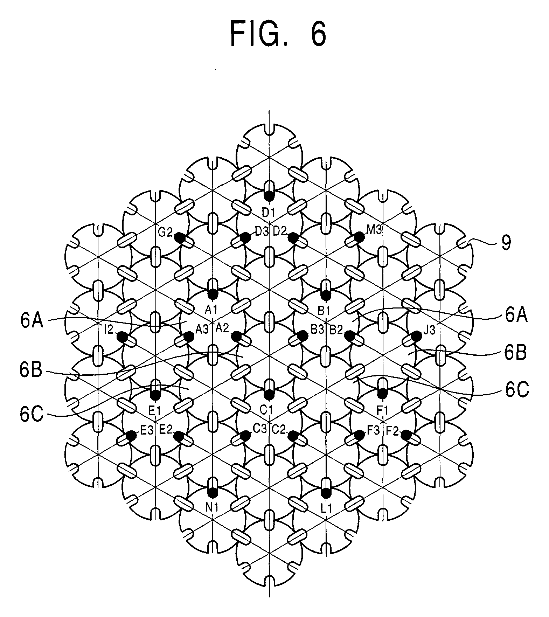

Referring now to Figure 6, Figure 7 and Figure 8, the following is the explanation regarding the composition process of a three dimensional 3X structure ST1 shown in Figure 2A. Figure 6 to Figure 8 shows a production process in detail for a 3X structure ST1 shown in Figure 2A, and Figure 6 shows the condition that three pieces of bobbin carriers 2 are supported in each of the first bobbin carrier driving disks 6A, which corresponds to aforementioned Figure 4.

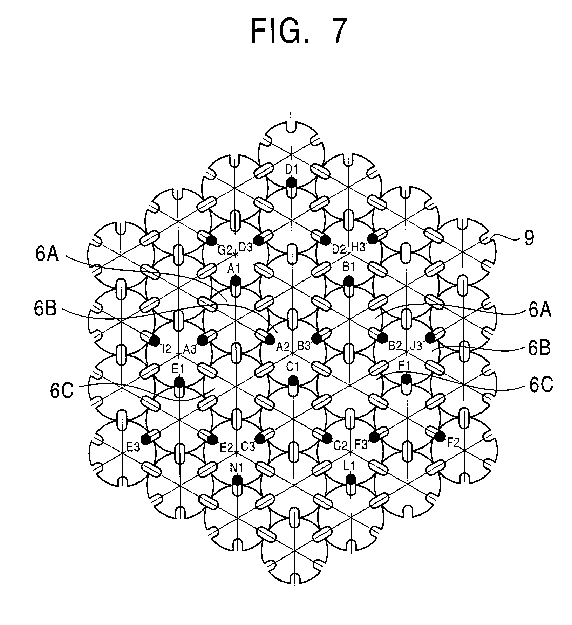

Figure 7 shows the condition that, in the condition shown in Figure 6, the bobbin carrier driving disk is rotated several times to twist linear structures 1 from respective bobbin carriers 2 in a 3X confounding form, forming the first layer of a 3X confounding part Tw1, then the bobbin carrier 2 is transferred from each of the first bobbin carrier driving disk 6A to each of the second bobbin carrier driving disk 6B to be supported.

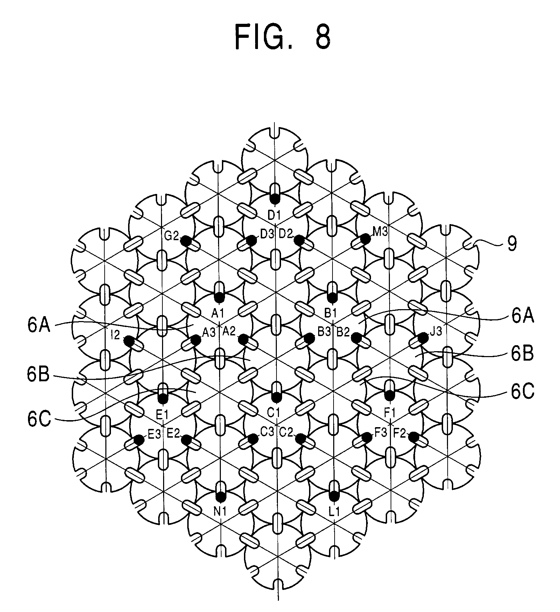

Figure 8 shows the condition that, in the condition shown in Figure 7, the bobbin carrier driving disk is rotated several times to twist linear structures 1 from respective bobbin carriers 2 in a 3X confounding form, forming the second layer of a 3X confounding section Tw2, then the bobbin carrier 2 is transferred from each of the second bobbin carrier driving disk 6B to each of the original bobbin carrier driving disk 6A to be supported. As described above, by following the process of Figure 6, Figure 7 and Figure 8, a 3X structure ST1 is composed.

In other words, in the stage shown in Figure 6, three pieces of bobbin carriers 2 is respectively supported for each of the first bobbin carrier driving disk 6A, and one of the first bobbin carrier driving disks 6A controls linear structures A1, A2, A3, and the bobbin carrier driving disk is rotated several times to twist and entangle linear structures A1, A2, A3 in a 3X confounding form, forming the first layer of the 3X confounding section Tw1. And then, the bobbin carrier 2, controlled by the first bobbin carrier driving disk 6A, is transferred to three pieces of the second adjacent bobbin carrier driving disk 6B, one of which controls linear structures A1, G2, D3, another of which controls linear structures A2, B3, C1, and the other of which controls linear structures A3, E1, I2. The bobbin carrier driving disk is rotated several times to individually twist and entangle the linear structures A1, G2, D3, the linear structures A2, B3, C1, and the linear structure A3, E1, I2, which are from respective bobbin carriers 2, in the 3X confounding form to form the second layer of the 3X confounding section Tw2 respectively, and adjacent linear structures are confounded each other in the 3X form, linking to compose three dimensional structures in succession.

The following is the description regarding the second composition example of the bobbin carrier driving means 3 in the manufacturing apparatus for a three dimensional structure of the present invention with reference to Figure 5.

Figure 5 is the second composition example of the bobbin carrier driving means 3 in the manufacturing apparatus for a three dimensional structure of the present invention, and Figure 5A is a schematic sectional side view thereof and Figure 5B is a schematic plan view thereof.

The bobbin carrier driving means 3 of the second composition example, as shown in Figure 5, provided with six bobbin shaft receiving entrances 9 which is open in the radial direction and spaced at a 60-degree angle for instance, composes a plurality of bobbin carrier driving disks 6 arranged in such manner that each adjacent periphery touches, and a rotation drive mechanism 7 in order to drive to rotate said bobbin carrier driving disks 6, and the bobbin carrier transfer mechanism 8B of the second embodiment that it stows to support a bobbin carrier 2 in the bobbin carrier shaft receiving entrance 9 in the bobbin carrier driving disks 6 and transfer the bobbin carrier 2 to the bobbin carrier shaft entrance 9 in the adjacent bobbin carrier driving disks 6.

As shown in Figure 5, for instance, the bobbin carrier driving means 3 is combined three bobbin carrier driving disks, which are the first bobbin carrier driving disk 6A, the second bobbin carrier driving disk 6B and the third bobbin carrier driving disk 6C, as one driving unit respectively and rotated by the rotation drive mechanism 7. In accordance with the example shown respective diagrams in Figure 5, the rotation drive mechanism 7 is comprised of a rotation drive source 11 connected to the second bobbin carrier driving disk 6B via a rotation shaft 10B.

The rotation shaft 10B is fitted with a driving gear 12 and the driving gear 12 meshes with a driven gear 13, fitted to a rotation shaft 10A in the first bobbin carrier driving disk 6A , and a driven gear 14, fitted to a rotation shaft 10C in the third bobbin carrier driving disk 6C. For instance, when the first bobbin carrier driving disk 6B is rotated anti-clockwise with the rotation drive source 11, it is possible to rotate the first bobbin carrier driving disk 6A and the third bobbin carrier driving disk 6C clockwise respectively.

The bobbin carrier transfer mechanism 8B of the second embodiment shown in Figure 5A is constructed on the upper end of the rotation shaft 10 in the respective bobbin carrier driving disks 6. This bobbin carrier transfer mechanism 8B of the second embodiment, for instance, provided with a cam member 23 which has a large-diameter cam face 23a and a small-diameter cam face 23b, both having a shape of an inverted truncated cone, a cam follower 24 installed on the bottom end side of the bobbin carrier 2 described later, and a rotation shaft vertical motion means 25 to move the rotation shaft 10 up or down, is composed so that the cam follower 24, installed on the bottom end side of the bobbin carrier 2, touches the small-diameter cam face 23b of the cam member 23, while the rotation shaft 10 is ascending by the rotation shaft vertical motion means 25, and the cam follower 24, installed on the bottom end side of the bobbin carrier 2, touches the large-diameter cam face 23a of the cam member 23, while the rotation shaft 10 is descending.

On the other hand, the bobbin carrier 2 has a bobbin supporting section 20 to support a bobbin 19 which is releasably twined with linear structures 1. On the bottom end side of the bobbin supporting section 20, a shaft section 21, fitted to the bobbin shaft entrance 9 wherein the bobbin carrier 2 is installed in the bobbin carrier driving disk 6, a flange section 22 to set this in the shaft direction, and the cam follower 24, touching the cam face of the cam member 23 which is composed on the upper end side of the rotation shaft 10 in the respective bobbin carrier driving disks 6, are installed.

In said composition, the bobbin carrier transfer mechanism 8B of the second embodiment operates as follows. In accordance with Figure 5A, the rotation shaft 10 of the second bobbin carrier driving disk 6B side is ascending, and the rotation shaft 10 on the first bobbin carrier driving disks 6A side and the second bobbin carrier driving disks 6B side are descending, and the cam follower 24, installed on the bottom end side of the bobbin carrier 2, is touching the small-diameter cam face 23b of the cam member 23 on the second bobbin carrier driving disk 6B side and also touching the large-diameter cam face 23a of the cam member 23 on the first bobbin carrier driving disk 6A side, and the bobbin carrier 2 is accepted in the bobbin shaft receiving entrance 9 of the second bobbin carrier driving disk 6B side to be supported.

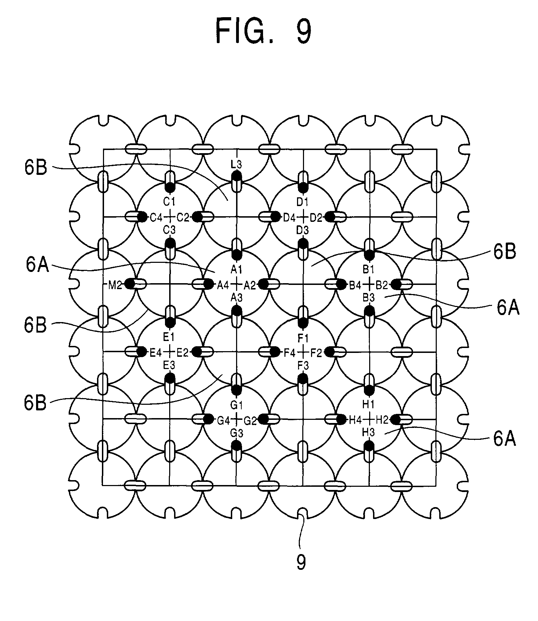

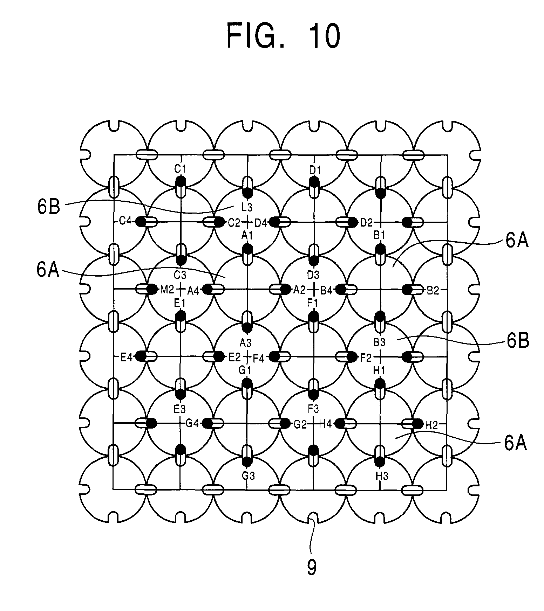

Referring now to Figure 9 and Figure 10, the following is the explanation regarding the composition process of a three dimensional 4X structure ST2 shown in Figure 2B. Figure 9 is a schematic plan view showing the condition of a bobbin carrier supported by each of the first bobbin carrier driving disk, and Figure 10 illustrates the condition that, in the condition shown in Figure 9, the bobbin carrier driving disk is rotated several times to twist linear structures from respective bobbin carriers in a 4X confounding form, forming the first layer of a 4X confounding section, then the bobbin carrier is transferred from each of the first bobbin carrier driving disk to each of the second bobbin carrier driving disk to be supported. As mentioned above, a 4X three dimensional structure ST2 is composed by going through the steps of Figure 9, Figure 10 and Figure 9.

The manufacturing apparatus for manufacturing a 4X three dimensional structure ST2 of the second example as shown in Figure 2B is different from the manufacturing apparatus for manufacturing said 3X structure ST1 in the composition of respective bobbin carrier driving disk 6 but there is no difference in the other composition, i.e., the bobbin carrier driving disk 6 in the manufacturing apparatus for manufacturing said 4X structure ST2 is comprised of the bobbin shaft receiving entrance 9 which is open in the radial directions at intervals of a 90-degree angle.

In accordance with the above-mentioned composition, in the stage shown in Figure 9, four pieces of bobbin carriers 2 are respectively supported to each of the first bobbin carrier driving disk 6A, and linear structures A1, A2, A3, A4 are controlled by one of the first bobbin carrier driving disk 6A, and the bobbin carrier driving disk is rotated several times to twist and entangle the linear structures A1, A2, A3, A4 from each bobbin carrier 2 in the 4X confounding shape, forming a 4X confounding part Tw1 of the first layer. And then, the bobbin carrier 2, controlled by the first bobbin carrier driving disk 6A, is transferred to four pieces of the second adjacent bobbin carrier driving disk 6B, one of which controls linear structures A1, C2, L3, D4, another of which controls linear structures A2, D3, B4, F1, the other of which controls linear structures A3, F4, G1, E2, and still the other of which controls linear structures A4, E1, M2, C3. The bobbin carrier driving disk is rotated several times to individually twist and entangle the linear structures A1, C2, L3, D4, the linear structures A2, D3, B4, F1, the linear structures A3, F4, G1, E2, and the linear structures A4, E1, M2, C3, which are from respective bobbin carrier 2, in the 4X confounding form, forming the 4X confounding section Tw2 of the second layer respectively, and adjacent linear structures are confounded each other in the 4X form, linking to compose a three dimensional structure in succession.

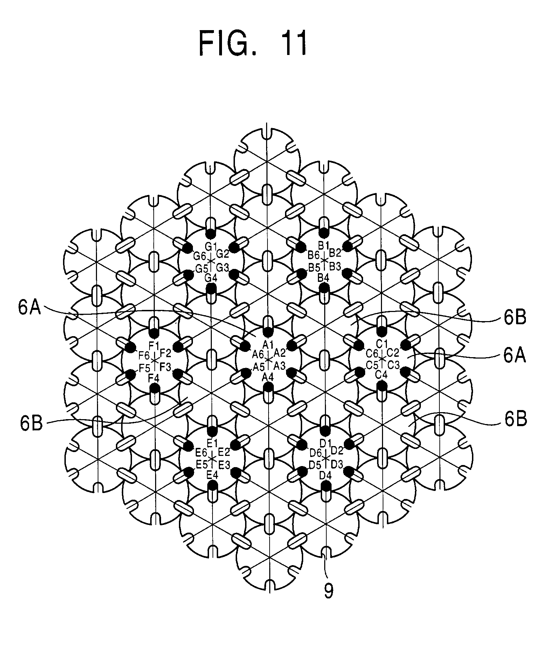

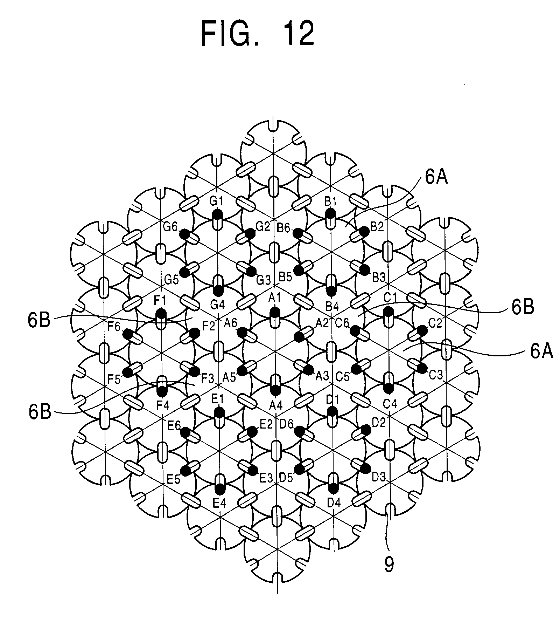

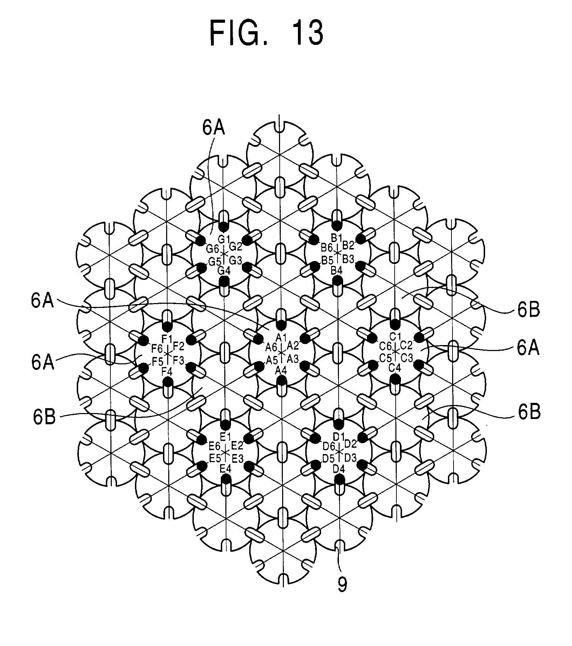

Referring now to Figure 11, Figure 12 and Figure 13, the following is the explanation regarding the composition process of a 6X-3X three dimensional structure ST3 shown in Figure 2C. Figure 11 through Figure 13 illustrates the detailed manufacturing process of a 6X-3X structure shown in Figure 2C, and Figure 11 is a schematic plan view showing the condition that six bobbin carriers are respectively supported by each of the first bobbin carrier driving disk, and Figure 12 illustrates the condition that, in the condition shown in Figure 11, the bobbin carrier driving disk is rotated several times to twist and entangle linear structures from respective bobbin carriers in a 6X confounding form, forming the 6X confounding section Tw1 of the first layer, then the bobbin carrier is transferred three at a time from each of the first bobbin carrier driving disk 6A to each of the second bobbin carrier driving disk 6B to be supported, and Figure 13 shows the condition that six pieces of bobbin carriers are transferred to be supported. As mentioned above, a three dimensional 6X-3X structure ST3 is composed by going through the steps of Figure 11, Figure 12 and Figure 13.

In the stage shown in Figure 11, six pieces of bobbin carriers 2 are respectively supported to each of the first bobbin carrier driving disk 6A, and linear structures A1, A2, A3, A4, A5, A6 are controlled by one of the first bobbin carrier driving disk 6A, and the bobbin carrier driving disk is rotated several times to twist and entangle the linear structures A1, A2, A3, A4, A5, A6 from each bobbin carrier 2 in the 6X confounding shape, forming a 6X confounding section Tw1 of the first layer. And then, the bobbin carrier 2, controlled by the first bobbin carrier driving disk 6A, is transferred to six pieces of the second adjacent bobbin carrier driving disks 6B, and the first of which controls linear structures A1, G3, B5, and the second of which controls linear structures A2, B4, C6, and the third of which controls linear structures A3, C5, D1, and the fourth of which controls linear structures A4, D6, E2, and the fifth of which controls linear structures A5, E1, F3, and the sixth of which controls linear structures A6, F2, G4. The bobbin carrier driving disk is rotated several times to individually twist and entangle the linear structures A1, G3, B5, the linear structures A2, B4, C6, the linear structures A3, C5, D1, the linear structures A4, D6, E2, the linear structures A5, E1, F3, and the linear structures A6, F2, G4, which are from respective bobbin carriers 2, in the 3X confounding form to form the 3X confounding section Tw2 of the second layer respectively, and adjacent linear structures are confounded each other in the 6X form and 3X form alternately, linking to compose three dimensional structures in succession.

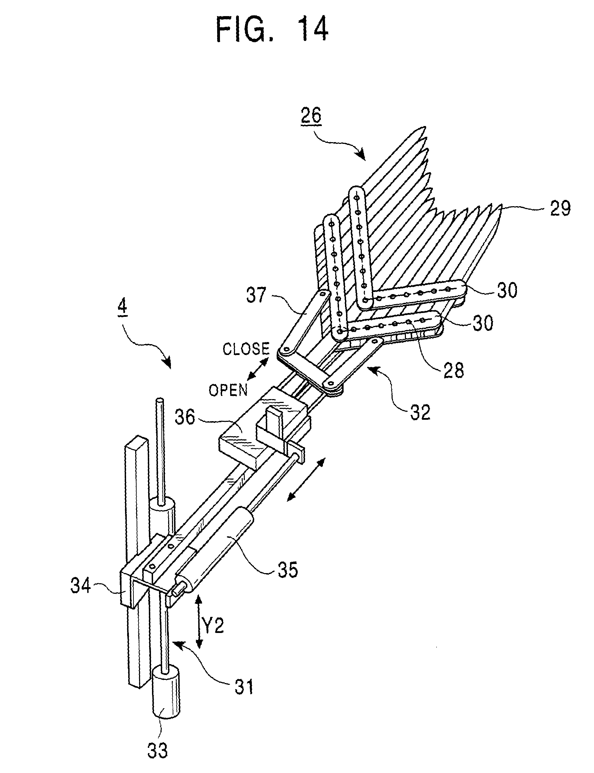

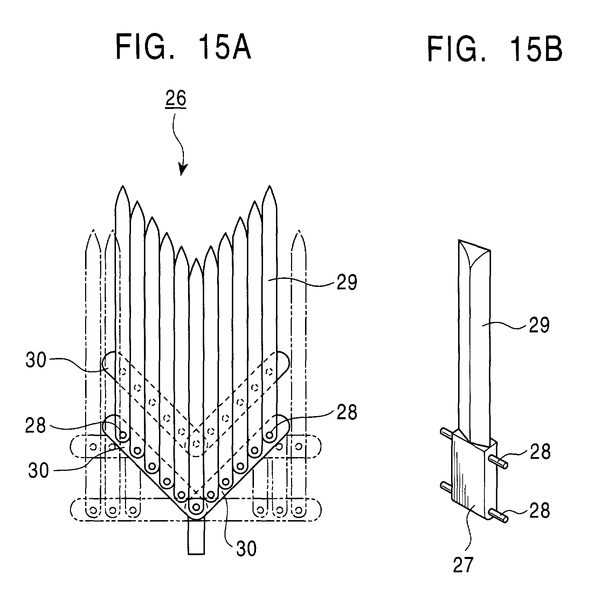

Referring now to Figure 14 and Figure 15, the following is the explanation regarding the beating means for beating convergent junction of said linear structure 2 in a manufacturing apparatus for a three dimensional structure of the present invention. Figure 14 is a schematic perspective diagram showing the concrete composition example of beating means 4 for beating this confounding section after the linear structures are twisted and entangled to form a confounding section in the manufacturing apparatus for a three dimensional structure of the present invention, and Figure 15 illustrates the concrete composition example of a reed structured solid in said beating means 4, and Figure 15A is a schematic plan view showing a closed condition of reeds in a reed structured solid with a solid line and an open condition of reeds with an assumed line, and Figure 15B is a schematic perspective view showing one form of reeds in the reed structured solid.

The beating means 4 is composed of three reed structured solids 26 which beat convergent junction of the linear structures from at least three directions. The reed structured solid 26 in the beating means 4, as shown in Figure 15A and Figure 15B, comprises a pair of pivots 28 and a plurality of reed pieces 29 provided at a base section 27. A plurality of reed pieces 29 mentioned above are connected via the pivots 28 by a connecting rod 30 so that they come closer or come away in parallel with each other in the direction of the length of reed pieces 29.

The beating means 4 comprises a reed structured solid drive mechanism 31, which is composed to drive the reed solid 26 forward or backward in arrows Y2 directions, and a reed piece open/close mechanism 32 to open or close the reed pieces 29 in the reed structured solid 26. The reed structured solid drive mechanism 31 is provided with a reed support device 34, which is in a rectilinear reciprocating motion by a drive source 33, and it is possible to reciprocate in arrows Y1 directions in Figure 1. The reed piece open/close mechanism 32, constructed on the reed support device 34, has a block member 36 which moves back and forth rectilinearly by a drive source 35 and the reed structured solid 26, constructed towards the block member 36 via link mechanism 37, and open or close the reed pieces 29 in the reed structured solid 26 as the reed structured solid 26 is moved back and forth by the drive source 35.

In a manufacturing apparatus for a three dimensional structure of the present invention, when a linear structure 1 applied as a material of the three dimensional structure is metal fiber, which possesses a relatively high stiffness such as a wire, it is impossible to carry out enough beating only with the beating means 4 and enough certain torsion to give at the X confounding structural section. Thus, with reference to the beating means 4, the present invention comprises at least one of the combination of a torsion reinforcing means 41, a forced torsion means 51, and forced transferring means 61, 71, 81.

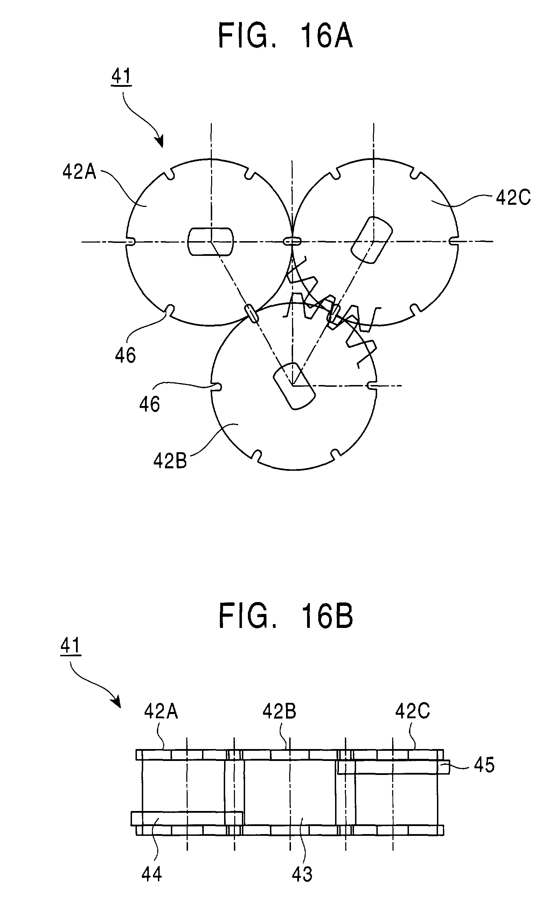

In a manufacturing apparatus for a three dimensional structure of the present invention, Figure 16 is a concrete example of the torsion reinforcing means 41 to reinforce a turning force to the linear structure 1, when the linear structure 1 applied as a material of the three dimensional structure is metal fiber, which possesses a high stiffness such as a wire, and Figure 16A is a schematic plan view thereof, and Figure 16B is a schematic elevation thereof. The torsion reinforcing means 41 of this embodiment is comprised of combinations as follows, a driven spur gear 44 with the first plate 42A, a driving spur gear 43 with the second plate 42B, the driven spur gear 45 with the third plate 42C, and the driven spur gears 44, 45 engaged in the driving spur gear 43. The respective plates 42A, 42B, 42C and the respective spur gears 43, 44, 45 are provided with six flutes 46 respectively to accept the linear structure 1.

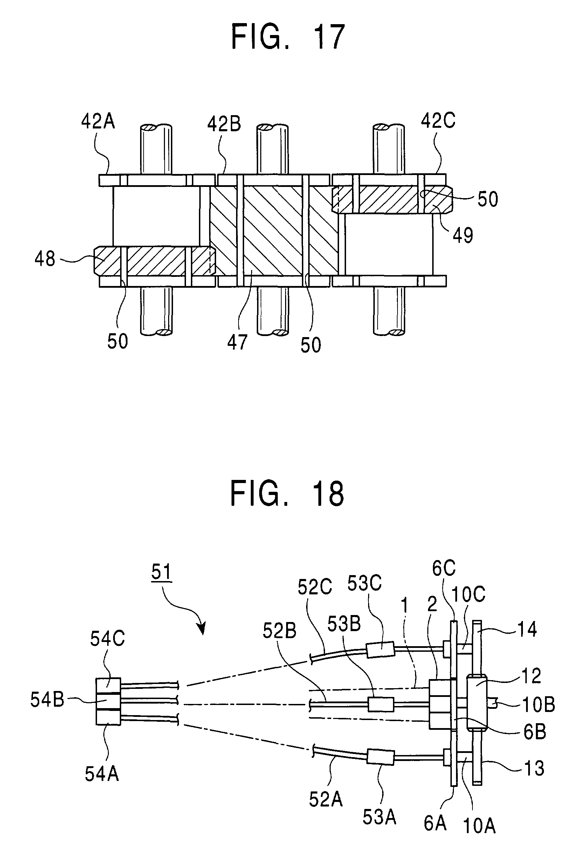

On the other hand, Figure 17 illustrates the torsion reinforcing means of another composition example shown in Figure 16 and is a schematic elevation showing an example which torsion reinforcing means is composed of helical gears 47, 48, 49 instead of the spur gears 43, 44, 45. In the case of this embodiment, the respective plates 42A, 42B, 42C and the respective spur gears 47, 48, 49 are provided with six flutes 46 respectively to accept the linear structure 1.

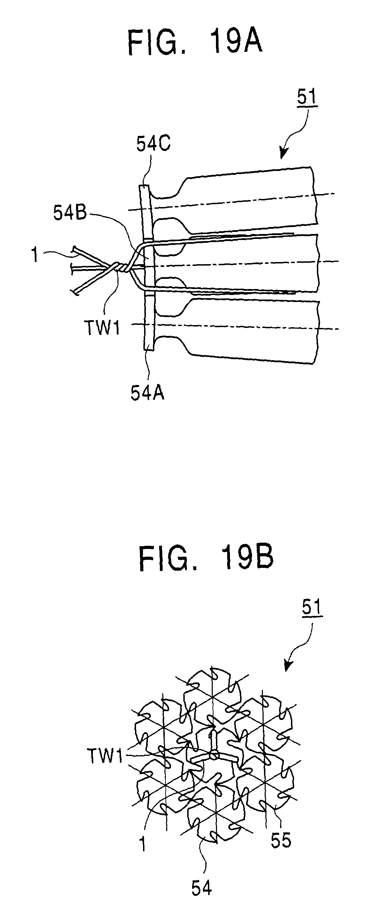

Figure 18 is a schematic elevation showing a basic composition example of the forced torsion means 51 combined to twist the linear structure forcibly nearby the torsion confounding section, and Figure 19 illustrates the details of a torsion section in said forced torsion means 51, and Figure 19A is a schematic elevation thereof, and Figure 19B is a schematic end view showing the side of end section.

In this embodiment, the forced torsion means 51 is composed of rotation shafts 52A, 52B, 52C, which have respective universal joints 53A, 53B, 53C reaching from respective rotation shafts 10A, 10B, 10C in the bobbin carrier driving disks 6A, 6B, 6C, and linear structure torsion set members 54A, 54B, 54C at the tip sections. The linear torsion set members 54A, 54B, 54C are provided with six receiving flutes 55 to direct the linear structure 1 to accept.

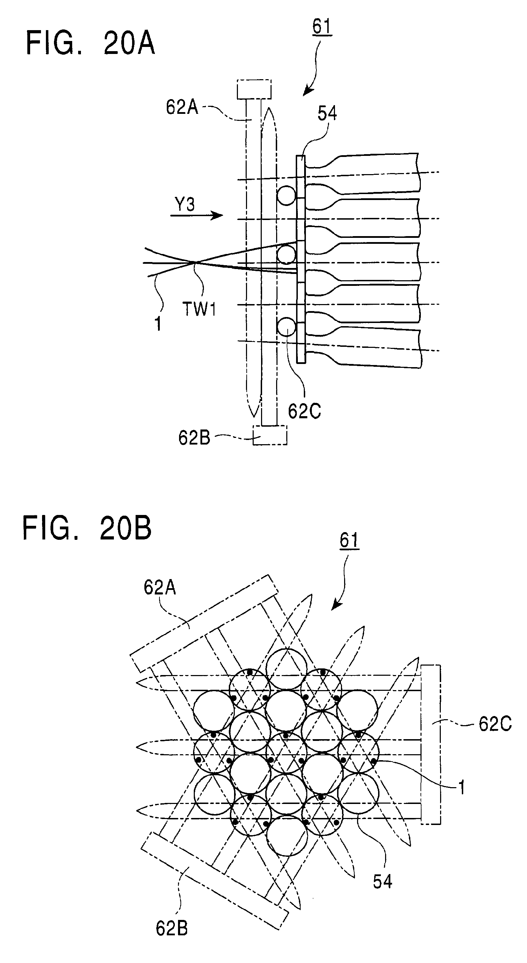

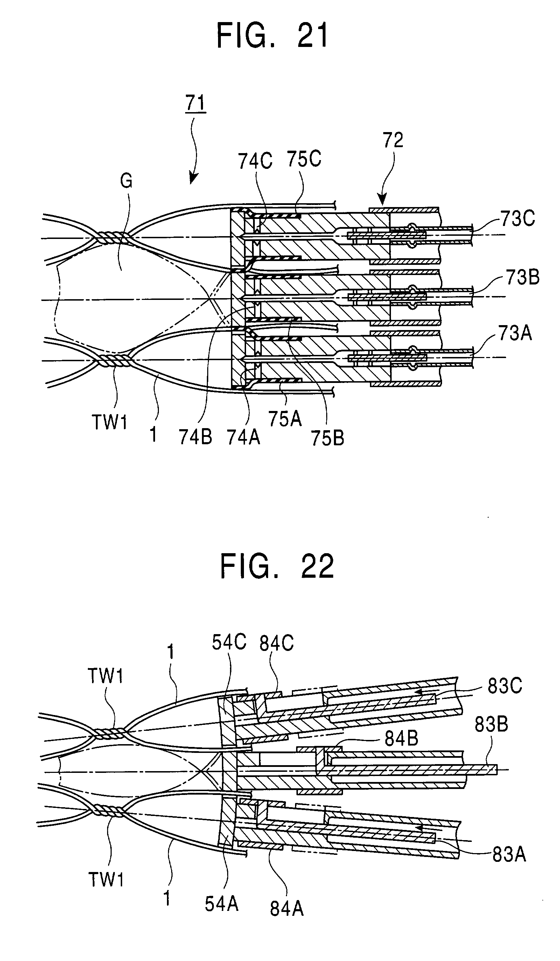

Furthermore, Figure 20 illustrates the first example (a select rod system) of the forced transfer means 61 to transfer the wire forcibly near the confounding section, when the linear structure possesses a high stiffness such as a wire, and Figure 20A is a schematic plan view thereof, and Figure 20B is a schematic side view seen in the direction of an arrow Y3 in Figure 20A, and Figure 21 is a schematic section view showing the main section of the second example (a balloon system) of the forced transferring means to forcibly transfer the linear structure, which possesses a high stiffness such as a wire, near the confounding section, and Figure 22 is a schematic section view showing the main section of the third example (a cylinder system) of the forced transfer means to forcibly transfer the linear structure, which possesses a high stiffness such as a wire, near the confounding section.

The forced transfer means 61 by the select rod system shown in Figure 20 as the first example in the present invention, for instance, is composed of comb blade members 62A, 62B, 62C entering from three directions at intervals of a 120-degree angle. The comb blade members 62A, 62B, 62C, for instance, which are combined on the free end side of the linear structure torsion set members 54A, 54B, 54C shown in Figure 19, as mentioned in Figure 20B, certainly allocate respective linear structures 1 to designated sections spaced at a 120-degree angle and twist to entangle said linear structure 1 in such a condition when the comb blade members 62A, 62B, 62C enter (indicated with a an assumed line in Figure 20B).

In the forced transfer means 71 which is a balloon system of the second example shown in Figure 21, for instance, air transport mechanisms 72A, 72B, 72C, composed of the linear structure torsion set members 54A, 54B, 54C shown in Figure 19, fitted with the air transport mechanisms 72A, 72B, 72C, has air transport paths 73A, 73B, 73C connected to an air supply source (not shown in the drawings), and the air transport paths 73A, 73B, 73C are connected to a crossroad 74 extending in the radial directions in the tip side 73a and send out the supplied air to the air transport paths 73A, 73B, 73C via the crossroads 74A, 74B, 74C. Polyurethane rubber members 75A, 75B, 75C are installed outside of the crossroads 74A, 74B, 74C at each of the linear structure torsion set members 54A, 54B, 54C and composed to be inflated outward by the air transport.

In accordance with Figure 21, with reference to the linear structure torsion set member 54B in the center, the air transport mechanism 72B is in the OFF position, and with reference to the linear structure torsion set member 54A, 54C on both sides, the air transport mechanism 72A, 72C are in the ON position.

By the inflation of the polyurethane rubber member 75A, 75C, the linear structure 1 as shown in Figure 21 is pushed to be pressed forcibly into a flute of the linear structure torsion set member 54B and stowed to be supported, surely maintaining the linear structure 1 immediately in front of the torsion section of the linear structure 1. In the case of this embodiment, it is preferable that a gauge member G is set in order to secure clearance between respective adjacent X confounding points.

Moreover, the forced transferring means 81, the cylinder system of the third example shown in Figure 22, for instance, is composed of the linear structure torsion set member 54A, 54B, 54C shown in Figure 19 fitted with cylinder mechanisms 82A, 82B, 82C. The cylinder mechanisms 82A, 82B, 82C comprising collar members 84A, 84B, 84C on the free end side of releases 83A, 83B, 83C, are composed so that the collar members 84A, 84B, 84C come closer or come away along the shaft direction against the linear structure torsion set member 54A, 54B, 54C on the rear end side of the linear structure torsion set members 54A, 54B, 54C.

In accordance with Figure 22, with reference to the linear structure torsion set member 54B in the center, the collar member 84B in the cylinder mechanism 82B in a backward position, and with reference to the linear structure torsion set members 54A, 54C on both sides, the collar member 84A in the cylinder mechanism 82A and the collar member 84C in the cylinder mechanism 82C are in the forward position. The linear structure 1 as shown in Figure22 is pushed to be pressed forcibly into a flute of said linear structure torsion set member 54B and stowed to be supported, surely maintaining the linear structure 1 immediately in front of the torsion section of the linear structure 1. In the case of this embodiment, it is also preferable that a gauge member G is set in order to secure clearance between respective adjacent X confounding points.

In accordance with a manufacturing method for a three dimensional structure of the present invention and its manufacturing method, the three dimensional structure is composed on the principle of braid composition, and, a 3X three dimensional structure, a 4X three dimensional structure, and a 6X-3X three dimensional structure may be composed. When these structures are placed in a fluid channel of a distillation device and employed as a filler for a mass transfer, a heat exchange, and so on, a fluid flows from three directions to a junction and flows in three directions in a 3X three dimensional structure, and a fluid flows from four directions to a junction and flows in four directions in a 4X three dimensional structure, and a fluid flows from six directions to a junction and flows in six directions, then each of them respectively separates in three directions to a 3X junction and flows in three directions in a 6X-3X three dimensional structure. It may be said that it acts extremely effectively on the point of the superior processing ability and the improvement of processing efficiency by reduction of a pressure force loss.

## Claims

1. A method for manufacturing a three dimensional structure with a linear structure pulled out individually from a plurality of bobbin carriers, comprising the steps of: supporting said plurality of bobbin carriers transferably and loadably, and moving the bobbin carrier so that linear structures from at least three directions are joined to converge at intervals in a composing direction and diverge in at least three directions.

2. A method for manufacturing a three dimensional structure to compose a 3X three dimensional structure as in Claim 1, comprising the steps of: supporting said plurality of bobbin carriers transferably and loadably, and moving the bobbin carrier so that linear structures from three directions are joined to converge at intervals in a composing direction and diverge in three directions to form a 3X junction.

3. A method for manufacturing a three dimensional structure to compose a 4X three dimensional structure as in Claim 1, comprising the steps of: supporting said plurality of bobbin carriers transferably and loadably, and moving the bobbin carrier so that linear structures from four directions are joined to converge at intervals in a composing direction and diverge in four directions to form a 4X junction.

4. A method for manufacturing a three dimensional structure to compose a 6X-3X three dimensional structure as in Claim 1, comprising the steps of: supporting said plurality of bobbin carriers transferably and loadably, moving the bobbin carrier so that linear structures from six directions are joined to converge at intervals in a composing direction and diverge in six directions to form a 6X junction, and joining to converge respective said diverged linear structures from two directions and diverge in three directions to form a 3X junction.

5. A apparatus for manufacturing a three dimensional structure with a linear structure pulled out individually from a plurality of bobbin carriers, comprising: bobbin carrier driving means for supporting said plurality of bobbin carriers transferably and loadably and moving the bobbin carrier so that linear structures from at least three directions are joined to converge at intervals in a composing direction and diverge in at least three directions, and beating means for beating a convergent junction of said linear structure; and structure lifting means for pulling up a formed structure.

6. A apparatus for manufacturing a three dimensional structure as in Claim 5, comprising: bobbin carrier driving means, provided with a plurality of bobbin shaft receiving entrances opening in radial directions, support to stow a plurality of bobbin carrier driving disks arranged to contact with a periphery and the bobbin carrier in a plurality of bobbin carrier shaft receiving entrances in said bobbin carrier driving disk, and a bobbin carrier transfer mechanism for transferring the bobbin carrier to a plurality of bobbin carrier shaft receiving entrances in the adjacent bobbin carrier driving disk.

7. A apparatus for manufacturing a three dimensional structure as in Claim 5, wherein said beating means is comprised of a reed structured solid which said beating means beats a convergent junction of said linear structure from at least three directions.

8. A apparatus for manufacturing a three dimensional structure as in Claim 7, wherein said beating means includes any of a torsion reinforcing mechanism, a forced torsion mechanism, and a forced transfer mechanism.

9. A three dimensional structure, comprising: a first confounding section converged with linear structures from at least three directions at intervals to confound, and a second confounding section converged with the linear structures from at least two directions adjacent to respective linear structures diverged in at least three directions from said confounding section to confound, wherein said first confounding section and said second confounding section are disposed successively.

10. A three dimensional structure, comprising: a first confounding section converged with linear structures from three directions at intervals to confound, and a second confounding section converged with the linear structures from two directions adjacent to respective linear structures diverged in three directions from said confounding section to confound, wherein said first confounding section and said second confounding section are disposed successively.

11. A three dimensional structure, comprising: a first confounding section converged with linear structures from four directions at intervals to confound, and a second confounding section converged with the linear structures from three directions adjacent to respective linear structures diverged in four directions from said confounding section to confound, wherein said first confounding section and said second confounding section are disposed successively.

12. A three dimensional structure, comprising: a first confounding section converged with linear structures from six directions at intervals to confound, and a second confounding section converged with the linear structures from two directions adjacent to respective linear structures diverged in six directions from said confounding section to confound, wherein said first confounding section and said second confounding section are disposed successively.

13. A three dimensional structure as in any one of Claims 8 to 12, wherein said each linear structure is twisted linear structures of which a plurality of strands are twisted.

14. A three dimensional structure in any one of Claims 8 to 13, wherein said first confounding section and/or said second confounding section are twisted and entangled to form solid confounding section.
